# EUROPEAN PATENT APPLICATION

(11) **EP 4 614 875 A1**
(43) Date of publication of application: **10.09.2025**
(21) Application number: 23887938.1
(22) Date of filing: 06.11.2023
(51) Int. Cl.: H04L 9/32

(54) **PERMISSION CONTROL METHOD, SMART VEHICLE AND SMART HOME APPLIANCE**

(30) Priority: 11.11.2022 CN 202211414457
(71) Applicant: Boe Technology Group Co., Ltd., Beijing 100015 (CN); Beijing BOE Technology Development Co., Ltd., Beijing 100176 (CN)
(72) Inventor: XIA, Youxiang, Beijing 100176 (CN); ZHAO, Junjie, Beijing 100176 (CN); SU, Jing, Beijing 100176 (CN); ZHANG, Honglei, Beijing 100176 (CN); CHEN, Shaobei, Beijing 100176 (CN); SHEN, Hongxiang, Beijing 100176 (CN)
(74) Representative: Cohausz & Florack
(86) International application number: PCT/CN2023/129849
(87) International publication number: WO 2024/099248

(57) **Abstract**

The present disclosure provides a permission control method, a smart vehicle and a smart home appliance, which are used to control the permission of a user to use the smart vehicle using a digital key as a carrier, avoiding potential risks such as information leakage and safety hazards. The method is applied to a smart vehicle. The method comprises: acquiring a digital key, and determining permission configuration information of the digital key; according to the permission configuration information, determining whether the digital key is provided with a control permission for a vehicle-mounted application; if the digital key is provided with the control permission for the vehicle-mounted application, accessing and controlling an application device using the vehicle-mounted application, the application device comprising a device which establishes a connection with the smart vehicle.

## Description

### Cross References to Related Applications

This application claims priority of Chinese patent application No. 202211414457.8, filed with the China National Intellectual Property Administration on November 11, 2022 and entitled "Permission Control Method, Smart Vehicle and Smart Home device". The entire contents of which are incorporated herein by reference.

### Technical Field

The present disclosure relates to the technical field of Internet of Things, and in particular to a permission control method, a smart vehicle and a smart home device.

### Background

The Internet of Things is a network based on information carriers such as the Internet and traditional telecommunications networks, which enables all ordinary objects that can perform independent functions to be interconnected. In the era of the Internet of Things, with the rapid development of smart vehicles and the popularization of vehicle-mounted applications, smart vehicles and smart home devices can be interconnected and controlled, and smart home devices can be controlled through the vehicle-mounted applications of smart vehicles.

At present, after smart vehicles and smart home devices are connected, any user of the smart vehicle can control the smart home devices through the smart vehicle's on-board application, so that any user has the same applicable permission as the vehicle owner. Under certain circumstances, this may lead to potential risks such as information leakage and security risks.

### Summary

The present disclosure provides a permission control method, a smart vehicle and a smart home device, which are used to control the permission of users of smart vehicles using digital keys as a carrier, so as to avoid potential risks such as information leakage and security risks.

In a first aspect, embodiments of the present disclosure provide a permission control method, which is applied to a smart vehicle, including:
obtaining a digital key to determine permission configuration information of the digital key;
determining, according to the permission configuration information, whether the digital key is configured with control permission for a vehicle-mounted application;
based on that the digital key is configured with the control permission for the vehicle-mounted application, accessing and controlling an application device by means of the vehicle-mounted application;
where the application device comprises a device that establishes a connection with the smart vehicle.

In a second aspect, embodiments of the present disclosure provide a permission control method, which is applied to a smart home device, including:
obtaining a device identifier or an application account of a mobile terminal;
determining, according to the device identifier or the application account, whether the smart home device is configured with control permission for accessing and controlling a smart vehicle by means of a home application;
based on that the smart home device is configured with the control permission for accessing and controlling the smart vehicle by means of the home application, accessing and controlling the smart vehicle by means of the home application.

In a third aspect, embodiments of the present disclosure further provide an smart vehicle, including a processor and a memory, where the memory is configured to store a program executable by the processor, and the processor is configured to read the program in the memory and execute the following operations:
obtaining a digital key to determine permission configuration information of the digital key;
determining, according to the permission configuration information, whether the digital key is configured with control permission for a vehicle-mounted application;
based on that the digital key is configured with the control permission for the vehicle-mounted application, accessing and controlling an application device by means of the vehicle-mounted application;
where the application device comprises a device that establishes a connection with the smart vehicle.

In a fourth aspect, embodiments of the present disclosure further provide a smart home device, including a processor and a memory, where the memory is configured to store a program executable by the processor, and the processor is configured to read the program in the memory and execute the following operations:
obtaining a device identifier or an application account of a mobile terminal;
determining, according to the device identifier or the application account, whether the smart home device is configured with control permission for accessing and controlling a smart vehicle by means of a home application;
based on that the smart home device is configured with the control permission for accessing and controlling the smart vehicle by means of the home application, accessing and controlling the smart vehicle by means of the home application.

In a fifth aspect, embodiments of the present disclosure further provide a permission control device, including:
a digital key acquisition unit, configured to acquire a digital key and determine permission configuration information of the digital key;
a key permission determination unit, configured to determine whether the digital key is configured with control permission for the vehicle-mounted application according to the permission configuration information;
an access control home unit, configured to access and control application devices using the vehicle-mounted application when the digital key is configured with control permission for the vehicle-mounted application; where the application device includes a device that establishes a connection with the smart vehicle.

In a sixth aspect, embodiments of the present disclosure also provide another permission control device, including:
an acquisition unit, configured to acquire a device identifier or an application account of a mobile terminal;
a permission determination unit, configured to determine whether the smart home device is configured with control permission to access and control the smart vehicle using the home application according to the device identifier or application account;
a vehicle control unit, configured to access and control the smart vehicle using the home application when the control permission for accessing and controlling the smart vehicle using the home application is configured.

In a seventh aspect, embodiments of the present disclosure further provide a computer storage medium on which a computer program is stored, and when the program is executed by a processor, it is used to implement the operations of the method described in the first aspect or the second aspect above.

These and other aspects of the present disclosure will become more apparent from the following description of the embodiments.

### Brief Description of Figures

In order to more clearly illustrate the technical solutions in embodiments of the present disclosure, the drawings required for use in the description of the embodiments will be briefly introduced below. Obviously, the drawings described below are only some embodiments of the present disclosure. For ordinary technicians in this field, other drawings can be obtained based on these drawings without creative work.
FIG. 1 is a schematic diagram of a vehicle-home interconnection of cloud-cloud interconnection provided by an embodiment of the present disclosure.
FIG. 2 is a schematic diagram of a vehicle-home interconnection of end-to-end interconnection provided by an embodiment of the present disclosure.
FIG. 3 is a flowchart of a method for permission control provided by an embodiment of the present disclosure.
FIG. 4A and FIG. 4B are flowcharts of vehicle-home interconnection based on a binding relationship between a digital key and a terminal identifier provided by an embodiment of the present disclosure.
FIG. 5A and FIG. 5B are flowcharts of vehicle-home interconnection based on a binding relationship between a digital key and an application account provided by an embodiment of the present disclosure.
FIG. 6 is a flowchart of a method for permission control provided by an embodiment of the present disclosure.
FIG. 7 is a schematic diagram of a connection relationship of a smart home device accessing a home-to-vehicle application through a single mobile terminal provided by an embodiment of the present disclosure.
FIG. 8 is a schematic diagram of a connection relationship of a smart home device accessing a home-to-vehicle application through plurality of mobile terminals provided by an embodiment of the present disclosure.
FIG. 9A and FIG. 9B are flowcharts of a smart home device accessing a smart vehicle provided by an embodiment of the present disclosure.
FIG. 10 is a schematic diagram of a smart vehicle provided by an embodiment of the present disclosure.
FIG. 11 is a schematic diagram of a smart home device provided by an embodiment of the present disclosure.
FIG. 12 is a schematic diagram of a permission control device provided by an embodiment of the present disclosure.
FIG. 13 is a schematic diagram of another permission control device provided by an embodiment of the present disclosure.

### Detailed Description

In order to make the purpose, technical solutions and advantages of the present disclosure clearer, the present disclosure will be further described in detail below in conjunction with the accompanying drawings. Obviously, the described embodiments are only part of the embodiments of the present disclosure, rather than all of the embodiments. Based on the embodiments in the present disclosure, all other embodiments obtained by ordinary technicians in the field without creative work are within the scope of protection of the present disclosure.

In embodiments of the present disclosure, the term "and/or" describes the association relationship of associated objects, indicating that three relationships may exist. For example, A and/or B may represent three situations: A exists alone, A and B exist at the same time, and B exists alone. The character "/" generally indicates that the associated objects before and after are in an "or" relationship.

The application scenarios described in the embodiments of the present disclosure are intended to more clearly illustrate the technical solutions of the embodiments of the present disclosure, and do not constitute a limitation on the technical solutions provided by the embodiments of the present disclosure. It is known to those skilled in the art that with the emergence of new application scenarios, the technical solutions provided by the embodiments of the present disclosure are also applicable to similar technical problems. In the description of the present disclosure, unless otherwise specified, the meaning of "plurality of" is two or more.

Smart home devices can be connected to the cloud through home servers and vehicle servers, so that the home applications of smart home devices can be used at home to control some or all functions of smart vehicles, such as controlling smart vehicles to turn on the air conditioner in advance through home applications. Similarly, smart vehicles can also use servers to control smart home devices through the vehicle applications of smart vehicles to achieve some or all functions, such as controlling the opening and closing of smart air conditioners, or controlling the opening and closing of smart curtains, etc. through vehicle applications. At present, existing smart vehicles do not limit the current user of smart vehicles to the use of vehicle applications. For example, the vehicle application of a smart vehicle is bound to the vehicle. When other users use the smart vehicle, other users have the same usage permission as the owner, which may lead to adverse consequences such as information leakage and security risks under certain conditions.

In the technological development of smart vehicles, digital keys have become a major trend in the future, and vehicle-mounted applications for controlling smart homes are becoming more and more popular. Digital keys, also known as Bluetooth keys or virtual keys, mainly use near-field communication technology (NFC), allowing users to unlock and lock vehicle doors and start vehicles through smart terminals or wearable smart devices with NFC functions, such as smart watches and bracelets. They can unlock vehicles, start engines, and monitor the number of times vehicles are opened. They can also share the unlocking and driving permission of digital keys with relatives and friends.

When the digital key is shared with other users, if other users can use the vehicle-mounted application freely like the vehicle owner and control the smart home devices through the vehicle-mounted application, there will be certain security risks. For example, when the smart vehicle is repaired, the maintenance staff can use the vehicle-mounted application to call the home's smart camera and other content, so there will be a risk of privacy leakage. For example, if other users illegally operate the appliances in the smart home device through the vehicle-mounted application, there may be certain security risks. Therefore, based on the shareable characteristics of the digital key, the embodiments proposes a method for permission control using the digital key as a carrier, so that the permission configuration information of different digital keys is used to limit the usage permission of different objects to the smart vehicle, thereby avoiding unnecessary potential risks. Similarly, it can also prevent unnecessary user groups, such as nannies, from accidentally operating or controlling vehicle applications through smart home devices.

A permission control method provided by embodiments of the present disclosure can be applied to smart vehicles or to application devices, such as smart home devices.

In the permission control method provided in the embodiments, the core idea is to use the digital key as a carrier and determine the usage permission of the digital key based on the permission configuration information of the digital key. When the digital key is shared with other users by the vehicle owner, the usage permission of other users for the smart vehicle is determined based on the permission configuration information of the shared digital key, so that the shared other users can use the smart vehicle reasonably within the scope of their usage permission, thereby avoiding unnecessary risks caused by the shared other users accidentally operating the in vehicle application to control the application device.

In some embodiments, the smart vehicle and application device in embodiments include but are not limited to two connection methods: the smart vehicle and the application device establish a connection through their respective servers, or establish a connection through a wireless communication node.

In some embodiments, when the application device includes a smart home device, the smart vehicle and the smart home device in the embodiments include but are not limited to the following two connection methods, as shown below.

The first connection method is achieved through cloud-to-cloud interconnection.

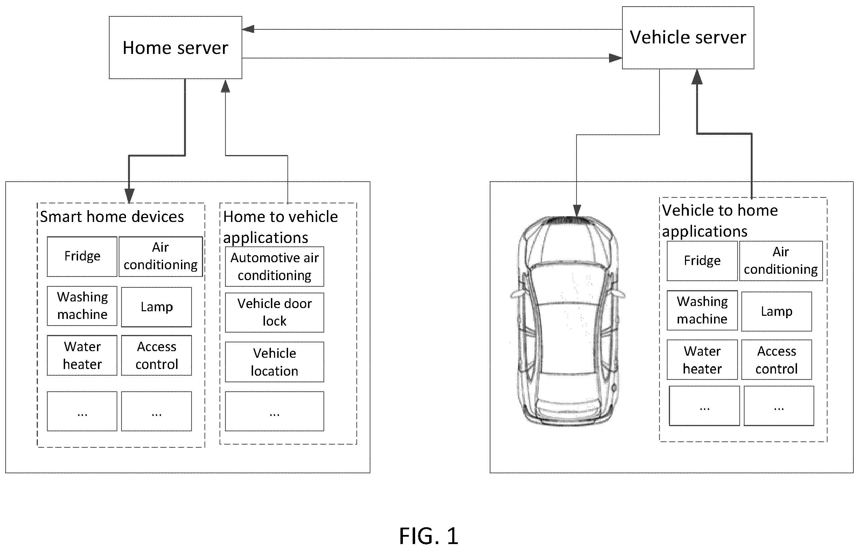

As shown in FIG. 1, the present embodiment provides a schematic diagram of cloud-to-cloud interconnection between the vehicle and the home, in which smart home devices are connected to a home server, and smart vehicles are connected to a vehicle server. The home server and the vehicle server are interconnected, and the corresponding command information is uploaded to their respective servers through smart vehicles or smart home devices, and the interconnection relationship between the servers is used to control the transmission of information.

The second connection method is achieved through end-to-end interconnection.

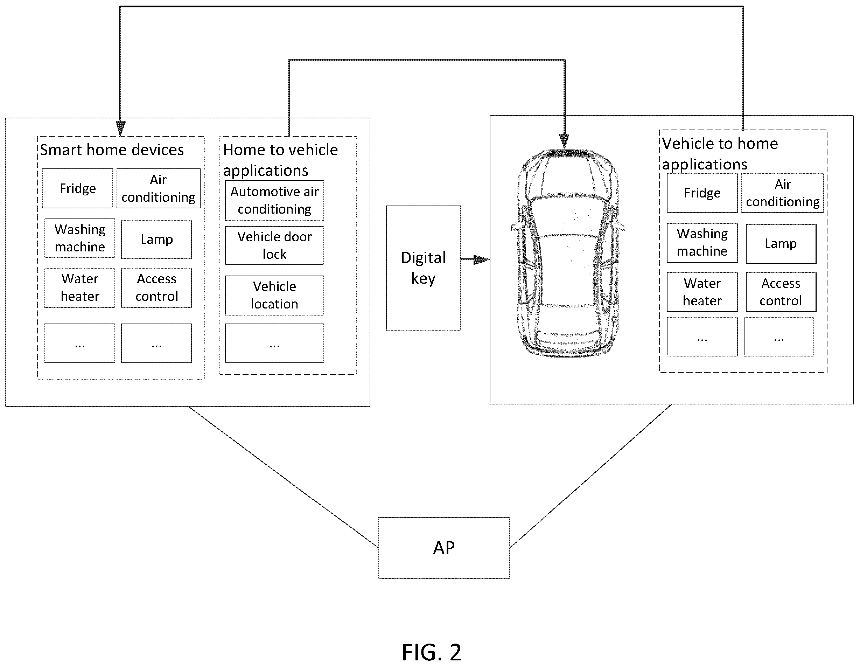

As shown in FIG. 2, the present embodiment provides a schematic diagram of an end-to-end vehicle-home interconnection. When the distance from the smart vehicle to the home is within a certain range, the smart vehicle can share the same wireless communication node with the smart home device through the vehicle-mounted Bluetooth or WiFi device, such as sharing a wireless access point (AP). At this time, the end-to-end interconnection of each server can be eliminated, and the smart vehicle and the smart home device can be interconnected through the AP node.

For example, when the distance from the smart vehicle to the home is within a certain range, the smart vehicle and the smart home device are connected to the same AP node, and the user can directly send the control information of the vehicle-to-home application of the vehicle application to the corresponding smart home device through the AP node, such as sending the control information of turning on the light, air conditioning, and heating to the corresponding smart home device through the AP node. In some embodiments, the user can operate the vehicle-to-home application in the vehicle application to generate control information, and send the control information to the AP node through the vehicle's onboard Bluetooth or WiFi device. The AP node forwards the control information to the corresponding smart home device, and the smart home device receives the control information through the WiFi module or Bluetooth module, and controls the corresponding function according to the control information.

It should be noted that the smart home device in the embodiment may be configured with a home application, which includes but is not limited to a home-to-vehicle application for controlling a smart vehicle. Similarly, a smart vehicle may be configured with a vehicle-mounted application, which includes but is not limited to a vehicle-to-home application for controlling smart home devices. When the smart home device and the smart vehicle are connected and interconnected, the vehicle-to-home application of the vehicle-mounted application of the smart vehicle may be used to control one or more smart home devices and/or one or more functions of a smart home. The home-to-vehicle application of the smart home device may also be used to control one or more smart vehicles and/or one or more functions of a smart vehicle.

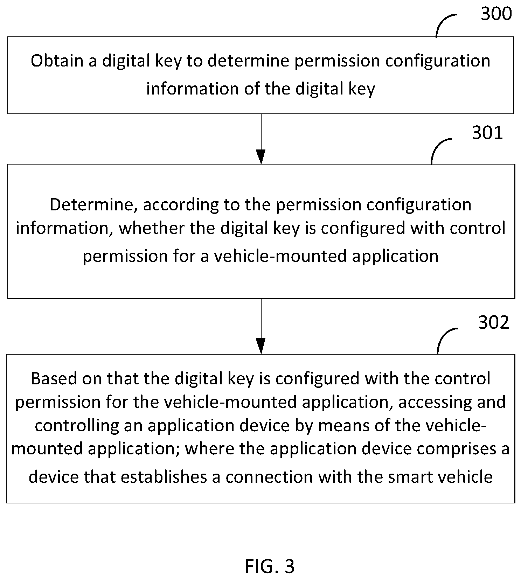

As shown in FIG. 3, a permission control method provided in the embodiment is applied to a smart vehicle. The specific implementation process of the method is as follows.

Step 300: obtain a digital key to determine permission configuration information of the digital key.

In some embodiments, according to the digital key standard, digital keys are shareable. During the sharing process, the permission can be configured for the shared digital keys. The current permission configuration information of digital keys is as follows:

```
    StandardProfiles ::= ENUMERATED
     {full (0), -- full access and drive capabilities
    accessOnly (1), -- only car access, no drive capabilities
    accessAndDriveRestricted (2), -- access and drive with restrictions
    carDelivery (3), -- car delivery profile
    valet (4), -- valet parking key
    vehicleService (5) - service key }.
```

In the related art, when a digital key is shared, the permission for the shared digital key can be set. For example, full permission and driving or drive permission can be set, or driving permission can be restricted. However, the existing permission settings are only for the vehicle itself and do not involve vehicle-mounted applications, let alone permission settings for various application programs in vehicle-mounted applications. For example, the existing permission settings do not involve vehicle-to-home applications related to home services. Therefore, in some embodiments, when the digital key is shared, the identity of the sharing object is different. By adding access permission settings for the vehicle-mounted applications in the permission configuration information of the digital key, the permission of different identity objects to use the vehicle-mounted application can be controlled.

In some embodiments, the permission configuration information of the digital key in some embodiments can add familyApplication and vehicleApplication (optional) information on the basis of the existing digital key standard, which is used to control the usage permission of vehicle-mounted applications. The specific permission configuration information is as follows:

```
    EnhancedProfiles ::= ENUMERATED
    {full (0), -- full access and drive capabilities
    accessOnly (1), -- only car access, no drive capabilities
    accessAndDriveRestricted (2), -- access and drive with restrictions
    carDelivery (3), -- car delivery profile
    valet (4), -- valet parking key
    vehicleService (5) - service key
    familyApplication(6) -family application
    vehicleApplication(7) - vehicle application}.
```

The family application field indicates whether the digital key is configured with control permission for the vehicle-to-home application, and the vehicle application field indicates whether the digital key is configured with control permission for the vehicle-mounted application. The family application field can further configure control permission for different smart home devices in the vehicle-to-home application, and/or control permission for different functions of the same smart home device. Similarly, the vehicle application field can further configure control permission for various types of applications in the vehicle-mounted application, and/or control permission for different functions in the same type of application.

Step 301: determine, according to the permission configuration information, whether the digital key is configured with control permission for a vehicle-mounted application.

In some embodiments, the digital key is configured with control permission for vehicle-mounted applications. In one implementation, when the digital key is configured with control permission for vehicle-mounted applications, after the digital key is verified, the user can access and control all applications in the vehicle-mounted applications, and control other application devices through the application programs.

In some embodiments, the application devices in the embodiments include but are not limited to near-end devices and far-end devices. The near-end devices include smart components inside the vehicle or smart devices installed on the vehicle. The far-end devices include smart devices with communication functions, which can be interconnected with the smart vehicle through the communication module to transmit the control signaling and the data. In some embodiments, the near-end devices include smart components such as smart voice assistants, smart air conditioners, and smart seat adjustments in smart vehicles, and the far-end devices include smart home devices, etc.

When the digital key is configured with control permission for vehicle-mounted applications, the vehicle-mounted applications can be used to access and control proximal devices; or, when the digital key is configured with control permission for vehicle-mounted applications, the vehicle-mounted applications can be used to access and control remote devices; or, when the digital key is configured with control permission for vehicle-mounted applications, the vehicle-mounted applications can be used to access and control both proximal and remote devices.

In some embodiments, when the remote device includes a smart home device, if the digital key is configured with control permission for the vehicle-mounted application, the vehicle-mounted application is used to access and control the smart home device.

In some embodiments, the vehicle-mounted application includes a vehicle-to-home application for controlling smart home devices; when the vehicle-mounted application includes the vehicle-to-home application, then after the digital key is used to start the vehicle, the vehicle-to-home application in the vehicle-mounted application can be used to remotely control the smart home devices. When the vehicle-mounted application also includes other applications and the other applications include smart components for controlling the smart vehicle itself, such as smart voice assistants, smart air conditioners, smart seat adjustments and other smart components in smart vehicles, then after the digital key is used to start the vehicle, other applications in the vehicle-mounted application can be used to control the corresponding smart components in the smart vehicle.

In one embodiment, when the digital key is configured with control permission over vehicle-mounted applications, after the digital key is verified, the user can access and control some of the vehicle-mounted applications. In some embodiments, the some of the applications include vehicle-to-home applications.

In some embodiments, when the digital key is configured with control permission for vehicle-mounted applications, the specific control permission of the digital key can be modified by adding or deleting corresponding permission content in the permission configuration information of the digital key. The permission configuration information in the embodiments includes but is not limited to control permission for various applications in vehicle-mounted applications, and/or control permission for various functions of an application in vehicle-mounted applications. How to configure the control permission of the digital key can be based on the identity of the object being shared.

It should be noted that in the process of sharing digital keys, the sharing object will share the digital key to the shared terminal of the shared object through the sharing terminal of the sharing object. The process of sharing digital keys is actually the process of creating a new digital key. When the sharing is successful, a new digital key will be created and saved in the shared terminal. The shared terminal can use the saved digital key to control the smart vehicle and obtain relevant usage permission in the smart vehicle.

In some embodiments, during the creation process of a digital key, the sharing object will select corresponding permission for the shared object based on the identity of the shared object, and permission configuration information of the digital key will be generated based on the selected permission.

Step 302: based on that the digital key is configured with the control permission for the vehicle-mounted application, accessing and controlling an application device by means of the vehicle-mounted application; where the application device comprises a device that establishes a connection with the smart vehicle.

In some embodiments, the application devices in the embodiments include a proximal device and a remote device; when the digital key is configured with control permission over an vehicle-mounted application, possible situations include: the digital key is configured with permission to use all vehicle-mounted applications; or, the digital key is configured with permission to use at least proximal applications, where proximal applications include application programs for controlling proximal devices; or, the digital key is configured with permission to use at least remote applications, where remote applications include application programs for controlling remote devices; or, the digital key is configured with permission to use at least one or more functions in proximal applications, or, the digital key is configured with permission to use at least one or more functions in remote applications, or, the digital key is configured with permission to use at least one or more functions in application programs. The embodiments do not impose too many restrictions on this.

In some embodiments, when the digital key is configured with control permission for vehicle-mounted applications, possible situations include: the digital key is configured with usage permission for all application programs in the vehicle-mounted applications; or, when the application programs include vehicle-to-home applications, the digital key is configured with permission to use at least the vehicle-to-home applications; or, when the application programs include vehicle-to-home applications, the digital key is configured with permission to use at least one or more functions in the vehicle-to-home applications. The embodiments do not impose too many restrictions on this.

In the related art, taking the application device as a smart home device as an example, after the vehicle-home interconnection, the driver can access the home server through the vehicle application, and then access the smart home device. However, with the popularization of digital keys, vehicle owners can share digital keys with other users through the digital key sharing function. Whether other users can access the home server through the vehicle application needs to be judged based on the permission after the digital key is shared, so as to ensure the privacy and security of home users.

In some embodiments, whether the digital key is configured with control permission for the vehicle application may be determined in the following manner:
obtain a terminal identifier bound to the digital key, where a binding relationship between the digital key and the terminal identifier is generated during a creation process of the digital key; determine whether the digital key is configured with the control permission for the vehicle-mounted application according to control permission corresponding to the terminal identifier.

In some embodiments, the control permission of the terminal identifier bound to the digital key is used to determine whether the digital key is configured with control permission for the vehicle-mounted application. The terminal identifier and the application device in the embodiments can have a binding relationship, and the terminal identifier can be a legal identifier pre-registered in the application device or application server, and the terminal corresponding to the terminal identifier can have the permission to access and control the application device. Therefore, when the terminal corresponding to the terminal identifier has the permission to access and control the application device, it means that the digital key also has the permission to access and control the application device, and the vehicle-mounted application can be used to access and control the application device.

In some embodiments, the vehicle-mounted application includes a vehicle-to-home application for controlling smart home devices. If the digital key is configured with control permission for the vehicle-to-home application, the vehicle-to-home application is used to access and control the smart home devices.

In some embodiments, during the digital key sharing process, the digital key and the terminal identifier are bound to realize the binding of the digital key's permission with the ability to access the home server. The terminal identifier needs to be registered with the home server (that is, the terminal corresponding to the terminal identifier is configured with the permission to access the home server). By establishing a binding relationship between the digital key and the terminal identifier, the access permission control of the smart home device can be realized. For example, when the digital key is shared with the mobile terminal of the family, the mobile terminal of the family can not only open the vehicle door and start the smart vehicle through the digital key, but also access the vehicle-mounted application, including the vehicle-to-home application, and then access and control the smart home device. When the digital key is shared with the mobile terminal of a friend, the mobile terminal of the friend can open the vehicle door and start the vehicle through the digital key, but cannot access the vehicle-to-home application, and then cannot access and control the smart home devices.

In some embodiments, when a smart vehicle obtains a digital key, it can also obtain a terminal identifier bound to the digital key, where the binding relationship between the digital key and the terminal identifier is generated during the digital key creation process. For example, in the process of a sharing terminal sharing the digital key it holds with a shared terminal, a digital key will be created, thereby establishing a binding relationship between the created digital key and the terminal identifier of the shared terminal; based on the control permission corresponding to the terminal identifier, it is determined whether the digital key is configured with control permission for the vehicle-to-home application.

In some embodiments, the smart vehicle can obtain the terminal identifier bound to the digital key, and can also obtain the control permission of the terminal identifier, so as to determine whether the digital key is configured with control permission for the vehicle-to-home application based on the control permission.

In some embodiments, the permission of the digital key can be limited through a two-level permission relationship. For example, first, based on the permission configuration information of the digital key, it is determined whether the digital key is configured with control permission for the vehicle-mounted application. After the digital key is configured with control permission for the vehicle-mounted application, it is then determined based on the terminal identifier bound to the digital key whether the digital key is configured with control permission for the vehicle-to-home application.

In some embodiments, after obtaining the terminal identifier bound to the digital key, the smart vehicle can send the terminal identifier to an application device or an application server, so that the application device or the application server determines whether to allow the smart vehicle to use the vehicle-mounted application to access and control smart home devices based on the control permission corresponding to the terminal identifier; where the application server includes the server of the application device.

In some embodiments, after obtaining the terminal identifier bound to the digital key, the smart vehicle can send the terminal identifier to a smart home device or a home server, so that the smart home device can determine whether to allow the smart vehicle to access and control the vehicle-to-home application based on the control permission corresponding to the terminal identifier. It is also possible to determine whether the digital key is configured with control permission for the vehicle-to-home application based on a response message of the terminal identifier returned by the smart home device or the home server, where the response message carries the control permission of the device identifier. The home server includes the server of the smart home device.

In some embodiments, when the smart vehicle does not store the correspondence between the terminal identifier and the control permission, that is, the smart vehicle cannot obtain the control permission of the terminal identifier, the terminal identifier can be sent to the smart home device or home server. In some embodiments, the terminal identifier can be sent to the home server through the respective servers, and the terminal identifier can also be sent to the smart home device according to the AP node; then, the smart home device or home server determines whether the smart vehicle is allowed to access and control the vehicle-to-home application according to the control permission corresponding to the terminal identifier. The smart home device or home server can determine whether the terminal identifier is a registered terminal identifier. If so, it means that the digital key can access and control the vehicle-to-home application, and then control the smart home device. Otherwise, it means that the digital key cannot access the vehicle-to-home application, and then cannot control the smart home device. After the smart home device or home server determines the control permission corresponding to the terminal identifier, a response message carrying the control permission of the terminal identifier can be fed back to the smart vehicle, thereby determining whether the digital key is configured with the control permission of the vehicle-to-home application according to the control permission of the terminal identifier carried in the response message.

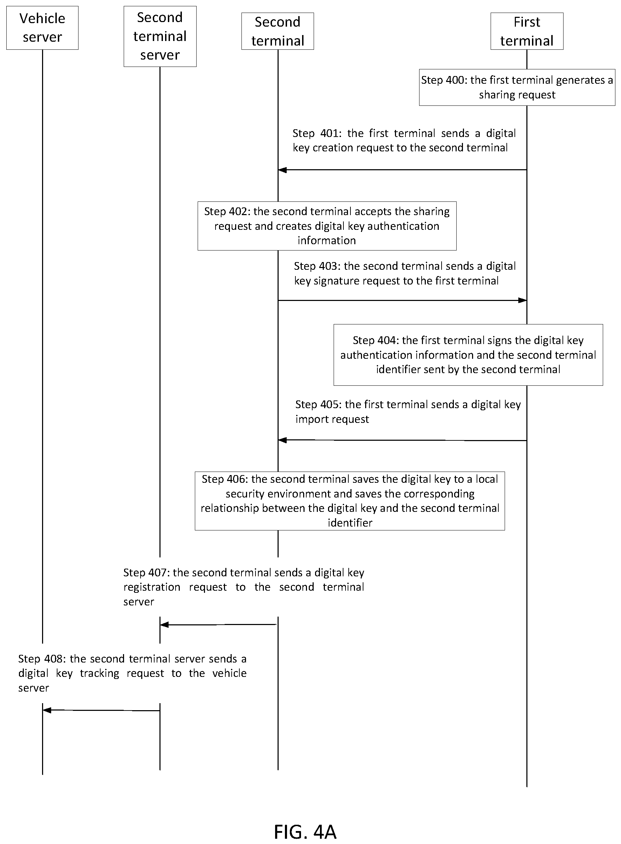

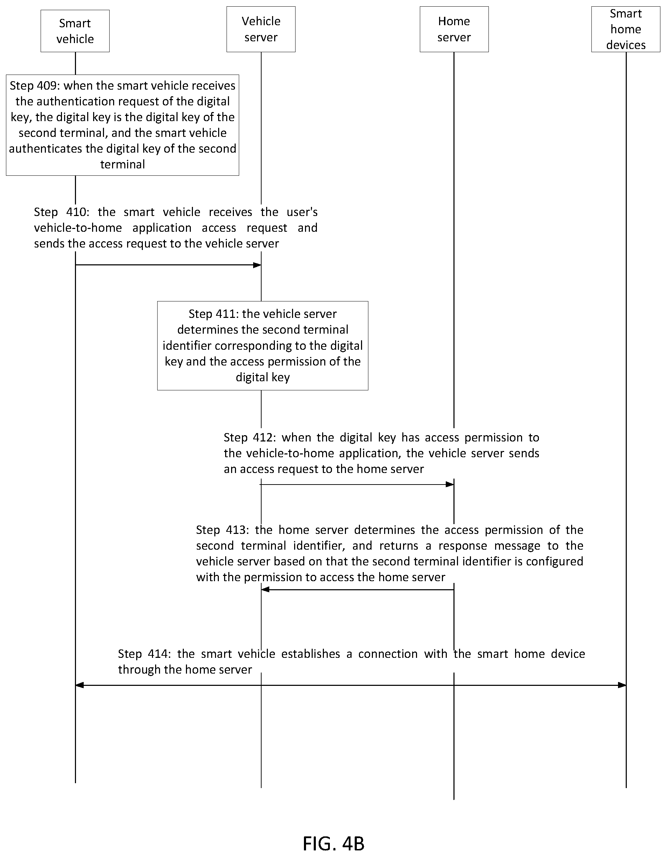

As shown in FIG. 4A and FIG. 4B, the embodiments provide a vehicle-home interconnection process based on the binding relationship between the digital key and the terminal identifier, which specifically includes a registration process and an interconnection process. As shown in FIG. 4A, the registration process is as follows.

Step 400: the first terminal generates a sharing request.

Step 401: the first terminal sends a digital key creation request to the second terminal, where the request includes familyApplication=1, which indicates that access to home devices is configured.

Among them, the permission to access home devices in the embodiments includes but is not limited to the access permission to one or more home devices or the access permission to one or more functions of a home device. The embodiments do not specifically limit the granularity of the permission to access home devices.

Step 402: the second terminal accepts the sharing request and creates digital key authentication information.

Step 403: the second terminal sends a digital key signature request to the first terminal, where the request includes digital key authentication information and a second terminal identifier.

Step 404: the first terminal signs the digital key authentication information and the second terminal identifier sent by the second terminal.

Step 405: the first terminal sends a digital key import request, where the digital key import request includes the signed digital key authentication information and the second terminal identifier.

Step 406: the second terminal saves the digital key to a local security environment and saves the corresponding relationship between the digital key and the second terminal identifier.

Step 407: the second terminal sends a digital key registration request to the second terminal server, where the request includes the signed digital key authentication information and the second terminal identifier.

Step 408: the second terminal server sends a digital key tracking request to the vehicle server, where the request includes the signed digital key authentication information and the second terminal identifier.

As shown in FIG. 4B, the interconnection process provided in the embodiments is as follows.

Step 409: when the smart vehicle receives the authentication request of the digital key, the digital key is the digital key of the second terminal, and the smart vehicle authenticates the digital key of the second terminal.

Step 410: the smart vehicle receives the user's vehicle-to-home application access request and sends the access request to the vehicle server.

Step 411: the vehicle server determines the second terminal identifier corresponding to the digital key and the access permission of the digital key.

Step 412: when the digital key has access permission to the vehicle-to-home application, the vehicle server sends an access request to the home server, where the request includes the second terminal identifier.

Step 413: the home server determines the access permission of the second terminal identifier, and returns a response message to the vehicle server based on that the second terminal identifier is configured with the permission to access the home server.

Step 414: the smart vehicle establishes a connection with the smart home device through the home server.

In some embodiments, the embodiments can also utilize the binding relationship between the digital key and the application account. When allocating the digital key, the digital key and the application account are bound. Different application accounts have different control permission for application devices, thereby enabling users with different digital keys to have different permission to access application devices.

In some embodiments, whether the digital key is configured with control permission for the vehicle application can be determined in the following manner:
obtain an application account bound to the digital key, where a binding relationship between the digital key and the application account is generated during the creation process of the digital key; determine whether the digital key is configured with the control permission for the vehicle-mounted application according to control permission corresponding to the application account.

In the implementation, during the digital key sharing process, the digital key and the application account are bound, so that the digital key's permission can be bound to the ability to access the application device or application server. The application account needs to be registered to the application device or application server (that is, the application account has the permission to access the application device or application server). By establishing a binding relationship between the digital key and the application account, the access permission control of the application device can be realized.

In some embodiments, taking the application device as a smart home device as an example, in the process of digital key sharing, the digital key and the application account are bound to realize the binding of the digital key's permission with the ability to access the home server. The application account needs to be registered with the home server (that is, the application account has the permission to access the home server), and by establishing a binding relationship between the digital key and the application account, the access permission control of the smart home device can be realized.

In some embodiments, while a smart vehicle obtains a digital key, it can also obtain an application account bound to the digital key, where the binding relationship between the digital key and the application account is generated during the digital key creation process. For example, in the process of a sharing terminal sharing the digital key it holds with a shared terminal, a digital key will be created, thereby establishing a binding relationship between the created digital key and the application account in the shared terminal; based on the control permission corresponding to the application account, it is determined whether the digital key is configured with control permission for the vehicle-to-home application.

In some embodiments, the smart vehicle can obtain the application account bound to the digital key, and can also obtain the control permission of the application account, thereby determining whether the digital key is configured with control permission for the vehicle-to-home application based on the control permission.

In some embodiments, the permission of the digital key can be limited through a two-level permission relationship. For example, first, based on the permission configuration information of the digital key, it is determined whether the digital key is configured with control permission for the vehicle-mounted application. After the digital key is configured with control permission for the vehicle-mounted application, it is then determined based on the application account bound to the digital key whether the digital key is configured with control permission for the vehicle-to-home application.

In some embodiments, after obtaining the application account bound to the digital key, the smart vehicle can send the application account to an application device or an application server, so that the application device or application server determines whether to allow the smart vehicle to access and control the vehicle-mounted application based on the control permission corresponding to the application account; where the application server includes the server of the application device.

In some embodiments, taking the application device as a smart home device as an example, after obtaining the application account bound to the digital key, the smart vehicle can send the application account to the smart home device, so that the smart home device determines whether to allow the smart vehicle to access and control the vehicle-to-home application according to the control permission corresponding to the application account. It is also possible to determine whether the digital key is configured with the control permission for the vehicle-to-home application according to the response message of the terminal identifier returned by the smart home device, wherein the response message carries the control permission of the application account.

In some embodiments, when the smart vehicle cannot obtain the control permission of the application account, the application account can be sent to the smart home device. In some embodiments, the application account can be sent to the smart home device through the respective servers, and the application account can also be sent to the smart home device according to the AP node; then, the smart home device determines whether the smart vehicle is allowed to access and control the vehicle-to-home application according to the control permission corresponding to the application account. The smart home device can determine whether the application account is a registered application account. If so, it means that the digital key can access and control the vehicle-to-home application, and then control the smart home device. Otherwise, it means that the digital key cannot access the vehicle-to-home application, and then cannot control the smart home device. After the smart home device determines the control permission corresponding to the application account, a response message carrying the control permission of the application account can be fed back to the smart vehicle, thereby determining whether the digital key is configured with the control permission of the vehicle-to-home application according to the control permission of the application account carried in the response message.

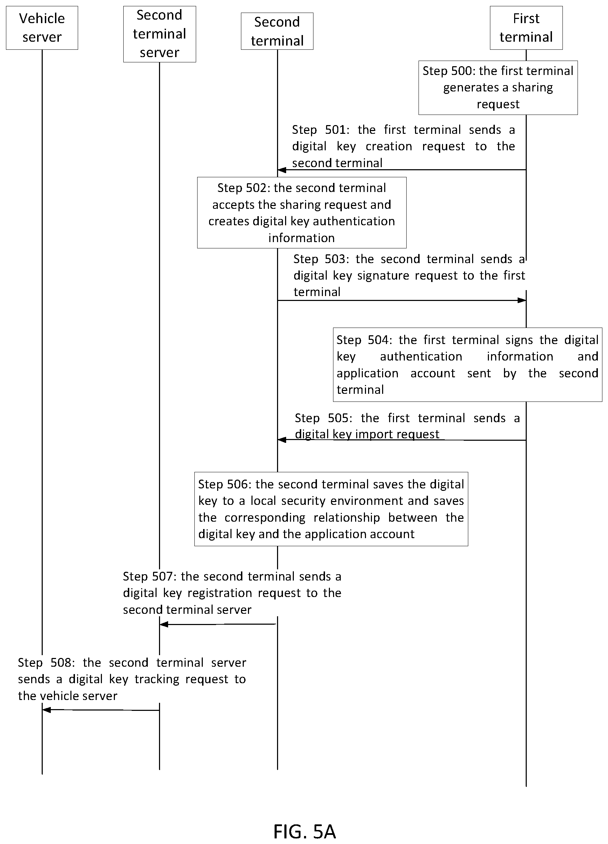

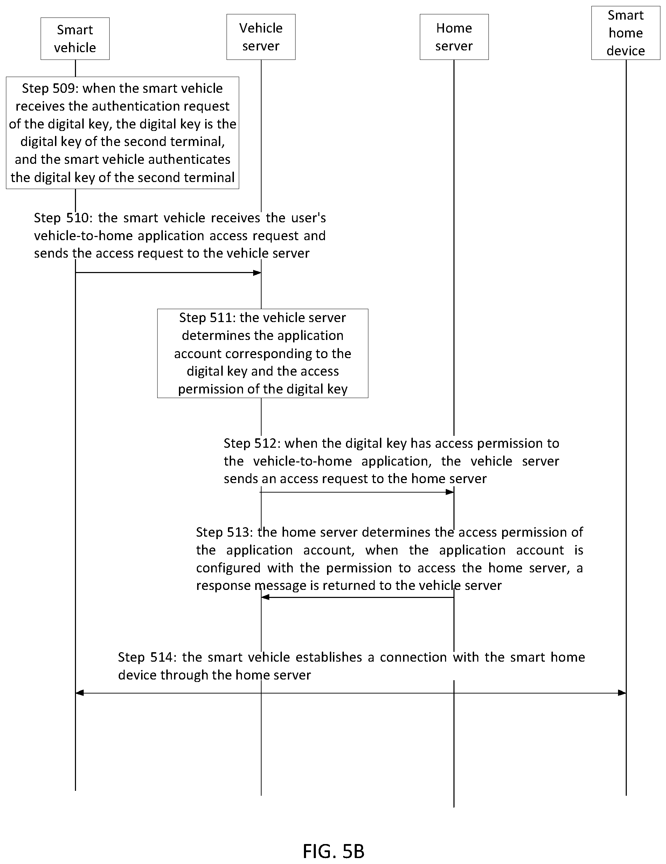

As shown in FIG. 5A and FIG.5B, the embodiments provide a vehicle-home interconnection process based on the binding relationship between a digital key and an application account, which specifically includes a registration process and an interconnection process. As shown in FIG. 5A, the registration process is as follows.

Step 500: the first terminal generates a sharing request.

Step 501: the first terminal sends a digital key creation request to the second terminal, where the request includes familyApplication=1, which is used to request access to a home device.

Step 502: the second terminal accepts the sharing request and creates digital key authentication information.

Step 503: the second terminal sends a digital key signature request to the first terminal, where the request includes digital key authentication information and an application account.

Step 504: the first terminal signs the digital key authentication information and application account sent by the second terminal.

Step 505: the first terminal sends a digital key import request, where the digital key import request includes the signed digital key authentication information and the application account.

Step 506: the second terminal saves the digital key to a local security environment and saves the corresponding relationship between the digital key and the application account.

Step 507: the second terminal sends a digital key registration request to the second terminal server, where the request includes the signed digital key authentication information and the application account.

Step 508: the second terminal server sends a digital key tracking request to the vehicle server, where the request includes the signed digital key authentication information and the application account.

As shown in FIG. 5B, the interconnection process provided in the embodiments is as follows.

Step 509: when the smart vehicle receives the authentication request of the digital key, the digital key is the digital key of the second terminal, and the smart vehicle authenticates the digital key of the second terminal.

Step 510: the smart vehicle receives the user's vehicle-to-home application access request and sends the access request to the vehicle server.

Step 511: the vehicle server determines the application account corresponding to the digital key and the access permission of the digital key.

Step 512: when the digital key has access permission to the vehicle-to-home application, the vehicle server sends an access request to the home server, and the request includes the application account.

Step 513: the home server determines the access permission of the application account, when the application account is configured with the permission to access the home server, a response message is returned to the vehicle server.

Step 514: the smart vehicle establishes a connection with the smart home device through the home server.

In some embodiments, when an application includes a plurality of functions, the plurality of functions include control functions corresponding to a plurality of application devices, or an application device includes a plurality of control functions. If the digital key is configured with control permission over at least one function of the application, the application is used to access and control at least one function corresponding to the application device.

In some embodiments, by limiting the specific content of permission control, more fine-grained permission control can be achieved. Not only can the plurality of application devices be controlled based on the permission configuration of the digital key, but only one application device can be controlled, and one or more functions of a certain application device can also be controlled.

In some embodiments, the embodiments can establish multi-level permission control. In some embodiments, the digital key is bound to a device identifier and an application account. The permission to use the digital key can be determined in the following manner.

When it is determined that the digital key is configured with control permission for the vehicle-mounted application according to the permission configuration information of the digital key, it is determined whether the digital key is configured with control permission for the vehicle-to-home application according to the terminal identifier bound to the digital key. When it is determined that the digital key is configured with control permission for the vehicle-to-home application, it is determined according to the application account bound to the digital key that the digital key has control permission for the functions in the vehicle-to-home application. The digital key can be configured with control permission for all functions in the vehicle-to-home application, or with control permission for some functions in the vehicle-to-home application. Through multi-level permission control, different fine-grained permission control is achieved for vehicle-mounted applications, vehicle-to-home applications, and functions of vehicle-to-home applications, which is suitable for a variety of application scenarios.

In some embodiments, the embodiments can also classify vehicle-mounted applications, for example, including high-permission vehicle-mounted applications, medium-permission vehicle-mounted applications and low-permission vehicle-mounted applications; where low-permission vehicle-mounted applications include but are not limited to the vehicle startup function, the vehicle unlocking function, etc.; medium-permission vehicle-mounted applications include but are not limited to entertainment applications and vehicle-mounted applications corresponding to low permission, etc.; high-permission vehicle-mounted applications include but are not limited to vehicle-to-home applications, and vehicle-mounted applications corresponding to medium permission and low permission, etc.

During the process of sharing digital keys or creating digital keys, different permission can be assigned to different digital keys, such as assigning high permission to digital keys stored in family members' mobile terminals, medium permission to digital keys stored in friends' mobile terminals, and low permission to digital keys stored in other mobile terminals.

In some embodiments, the vehicle-mounted application includes different application programs; different permission levels can be configured for different digital keys, thereby improving the granularity of digital key permission control. After the permission level is configured for the digital key, the control permission of the digital key can be determined through the following steps.

According to the permission configuration information, the permission level of the digital key is determined; according to the correspondence between the preset permission level and the application, it is determined that the digital key is configured with the control permission of the application corresponding to its own permission level.

In some embodiments, the permission level configuration can be added to the permission configuration information of the digital key. The embodiments provide permission configuration information of a digital key for configuring the permission level. The configuration file is specifically as follows:

```
    KeyConfiguration ::= SEQUENCE
    {
    version INTEGER (1..255), --version of this schema, shall be 1
    updateCounter INTEGER (0..255), --0 initially, increased every time
    profiles AccessProfiles,
    notBefore Time: "..." --shall use UTCTime or GeneralizedTime format
    notAfter Time: "..." --shall use UTCTime or GeneralizedTime format
    friendlyName UTF-8 String (SIZE (1..30)), --name displayed on device
    priority - key priority 0-low priority, 1- medium priority, 2-high priority
    }
    StandardProfiles ::= ENUMERATED
    {
    full (priority = 2), -- full access and drive capabilities
    accessOnly (priority = 0), -- only car access, no drive capabilities
    accessAndDriveRestricted (priority = 1), -- access and drive with restrictions
    carDelivery (priority = 2), -- car delivery profile
    valet (priority =1), -- valet parking key
    vehicleService (priority =1) - service key
    familyApplication(priority =2) -family application
    vehicleApplication(priority =2) - vehicle application
    }.
```

By using the priority field, configuration information for the permission level of the digital key is added, and multiple levels of permissions are configured for the digital key. The permission level in the embodiments is only an example, and the setting of other permission levels based on the same inventive concept also falls within the scope of protection of this disclosure.

In some embodiments, the vehicle-mounted application includes different applications; the application includes a vehicle-to-home application; if the digital key is configured with control permission for the vehicle-to-home application corresponding to its own permission level, the vehicle-to-home application is used to access and control the smart home device.

In some embodiments, each permission level corresponds to the control permission of one or more applications. In some embodiments, a plurality of permission levels can be defined. For example, the high level is divided into the first sub-high level, the second sub-high level, and the third sub-high level. The control permission of different functions of a certain application is limited by the first sub-high level, the second sub-high level, and the third sub-high level.

In some embodiments, when the digital key saved by the shared terminal is used in a smart vehicle, a specific operation is performed at a specific time. For example, the functions of some smart home devices need to be used at the same time when the vehicle is used. For example, the shared object needs to drive the vehicle back to the basement of the shared object's home after using the vehicle. At this time, the digital key of the shared terminal of the shared object needs to be configured with the permission to open the basement door. In this case, a permission configuration method can be provided. When the shared object shares the digital key, the permission of the smart home device corresponding to the need is selected according to the needs of the shared object, such as the permission to open the basement door lock, and the corresponding function permission configuration is added to the permission configuration information of the digital key, and the digital key and the permission configuration information are shared with the shared object together.

In some embodiments, the vehicle-mounted application includes different application programs, and the applications include different functions. In some embodiments, the function permission configuration corresponding to the function can also be determined based on the permission configuration information; based on the function permission configuration, it is determined that the digital key is configured with control permission over the function.

In some embodiments, the application program includes a vehicle-to-home application, which includes a plurality of functions, and the plurality of functions include control functions corresponding to a plurality of smart home devices, or a plurality of control functions included in a smart home device. If the digital key is configured with control permission for at least one function of the vehicle-to-home application, the vehicle-to-home application is used to access and control at least one function corresponding to the smart home device.

In some embodiments, before using the vehicle-to-home application to access and control the smart home device, the smart vehicle and the smart home device establish a connection through their respective servers, or establish a connection through a wireless communication node, such as establishing a connection through an AP node.

In some embodiments, the process of the application device controlling the smart vehicle using the terminal identifier is as follows:
receive an access request message sent by the application device or an application server, where the access request message comprises a terminal identifier obtained by the application device;
determine whether the digital key bound to the terminal identifier is legal and valid;
based on that the digital key is legal and valid, access and control the smart vehicle according to the permission configuration information of the digital key.

In some embodiments, taking the smart home devices as an example, the smart home devices can also control smart vehicles based on the digital key bound to the terminal identifier. The specific steps are as follows.

Step 1a) receive an access request message sent by a smart home device or a home server, where the access request message includes a terminal identifier obtained by the smart home device.

Step 1b) determine whether the digital key bound to the terminal identifier is legal and valid.

Step 1c) based on that the digital key is legal and valid, access and control the smart vehicle according to the permission configuration information of the digital key.

In some embodiments, the process of an application device controlling a smart vehicle using an application account is as follows:
receive an access request message sent by the application device or an application server, where the access request message comprises an application account obtained by the application device;
determine whether the digital key bound to the application account is legal and valid;
based on that the digital key is legal and valid, access and control the smart vehicle according to the permission configuration information of the digital key.

In some embodiments, taking the smart home devices as an example, the smart home devices can also control smart vehicles based on the digital key bound to the application account. The specific steps are as follows.

Step 2a) receive an access request message sent by a smart home device or a home server, where the access request message includes an application account obtained by the smart home device.

Step 2b) determine whether the digital key bound to the application account is legal and valid.

Step 2c) based on that the digital key is legal and valid, access and control the smart vehicle according to the permission configuration information of the digital key.

In some embodiments, a home usually includes a plurality of types of smart home devices, many of which are equipped with human-machine interaction interfaces, so that smart vehicles can be accessed and controlled through smart home devices, for example, vehicle cameras, vehicle driving recorders, vehicle sensors, etc. can be accessed and controlled. However, since there may be objects of different identities in the home, such as family members, service personnel, visitors, etc., in order to prevent all objects from directly accessing the smart vehicle through smart home devices, the embodiments provide a method of permission control, so that when smart home devices access smart vehicles, the behavior of the accessed objects needs to be restricted.

In some embodiments, when a smart home device accesses a smart vehicle, it needs to obtain the terminal identifier of the mobile terminal, and then access the vehicle server according to the terminal identifier. In some embodiments, the smart home device obtains the terminal identifier in a manner including but not limited to obtaining it through short-range communication methods such as NFC (Near Field Communication) and Bluetooth.

In the process of creating the digital key in the embodiments, a binding relationship between the digital key and the terminal identifier is established. When the mobile terminal approaches the corresponding smart home device, by verifying the device identifier, it can be determined whether the current object has the control permission to control the vehicle application. For example, when the object is watching TV or video and needs to go out, after connecting to the same network with the smart TV through the mobile terminal, the terminal identifier of the mobile terminal is verified. After the verification is passed, it can be determined whether to enable the interaction permission between the smart vehicle and the smart TV according to the permission configuration of the terminal identifier, or when the mobile terminal is a certain distance away from the TV or interacts with the TV, such as using the mobile terminal to scan the QR code displayed by the smart TV, or through distance sensing, collision sensing, etc., to verify the terminal identifier of the mobile terminal. It is also possible to establish a binding relationship between the digital key and the application account, verify the permission configuration of the application account, and determine whether to enable the interaction permission between the smart vehicle and the smart TV.

After the verification is passed and it is determined that the smart TV and the vehicle-mounted application can be interconnected according to the terminal identifier or the permission configuration of the application account, the video information currently played on the smart TV can be retained, and the video information and the play time node can be sent to the vehicle-mounted application. When the user gets in the vehicle, they can use the digital key bound to the terminal identifier or application account to verify with the smart vehicle. After the verification is passed, the video information and play progress can be read. The video play progress can also be sent to the smart vehicle's display screen, such as the rear seat display screen, by operating the home-to-vehicle application on the smart TV, and the play progress can be synchronized on the display screen.

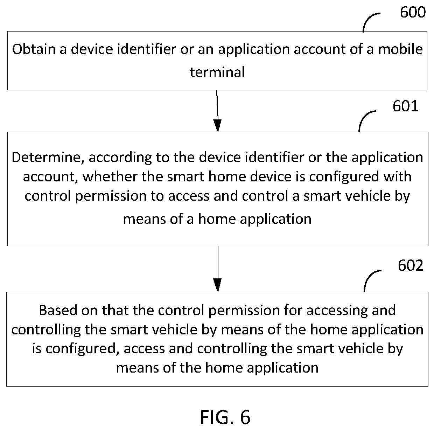

In some embodiments, based on the same inventive concept, as shown in FIG. 6, the embodiments further provide a method for permission control, which is applied to smart home devices. The specific implementation process of the method is as follows.

Step 600: obtain a device identifier or an application account of a mobile terminal.

In some embodiments, the smart vehicle can be controlled through the home-to-vehicle application included in the home application of the smart home device. When using the home-to-vehicle application, the home-to-vehicle application can be accessed in two ways. One way is to establish a connection between the mobile terminal and the smart home device, and access the home-to-vehicle application through the device identifier of the mobile terminal. The premise of this method is that the device identifier of the mobile terminal needs to be registered in advance with the home server. At this time, the device identifier has the permission to access the home server and the home application. Another way is to access the home application and the home-to-vehicle application through the application account registered with the home server.

In some embodiments, when the smart home device obtains the device identifier of the mobile terminal, it can obtain it through short-range communication methods such as NFC and Bluetooth, and the embodiments do not impose too many restrictions on this.

In some embodiments, when obtaining an application account, the smart home device can receive the application account input by the user on the display interface of the smart home device, or it can first obtain the device identifier of the mobile terminal, and then obtain the application account bound to the device identifier. This method requires the device identifier of the mobile terminal to establish a binding relationship with the application account when registering with the home server, so that the application account bound to the device identifier can be determined by obtaining the device identifier. The embodiments do not impose too many restrictions on this.

Step 601: determine, according to the device identifier or the application account, whether the smart home device is configured with control permission to access and control a smart vehicle by means of a home application.

Step 602: based on that the control permission for accessing and controlling the smart vehicle by means of the home application is configured, access and controlling the smart vehicle by means of the home application.

In some embodiments, after obtaining the device identifier, the following steps are performed to determine whether the smart home device is configured with control permission to access and control the smart vehicle using the home application according to the device identifier.

Firstly, determine the permission configuration information of the device identifier.

Secondly, according to the permission configuration information, determine whether the device identifier is configured with control permission to access and control the smart vehicle using the home application.

In some embodiments, the home application includes a home-to-vehicle application for controlling a smart vehicle. When the device identifier is configured with control permission for the home application, possible situations include: the device identifier is configured with permission to use all application programs in the home application; or, the device identifier is configured with permission to use at least the home-to-vehicle application; or, the device identifier is configured with permission to use at least one or more functions in the home-to-vehicle application, which is not limited in the embodiments.

In some embodiments, the home application includes a home-to-vehicle application for controlling a smart vehicle. If the smart home device is configured with control permission to access and control the smart vehicle using the home-to-vehicle application, the home-to-vehicle application is used to access and control the smart vehicle.

In some embodiments, the smart home device can obtain the device identifier of the mobile terminal and determine whether the device identifier is bound to a digital key, thereby determining whether the control permission to access and control the smart vehicle using the home-to-vehicle application is configured based on the digital key. The specific operations are as follows:
determine whether the device identifier is bound to a digital key;
based on that the device identifier is bound to the digital key, determine whether the smart home device is configured with the control permission for accessing and controlling the smart vehicle by means of the home-to-vehicle application according to permission configuration information of the digital key bound to the device identifier;
where a binding relationship between the digital key and the device identifier is generated during a creation process of the digital key.

In some embodiments, during the digital key sharing process, the digital key and the terminal identifier can be bound, and the permission of the digital key can be bound to the ability to access the home server.

In some embodiments, when the smart home device obtains a device identifier and determines that the device identifier is bound to a digital key, and based on the permission configuration information of the digital key bound to the device identifier, determines that the smart home device is configured with control permission to access and control the smart vehicle using the home-to-vehicle application, then the smart vehicle can be controlled through the home-to-vehicle application of the smart home device. For example, based on the permission configuration information of different digital keys, the vehicle door can be opened, the smart vehicle can be started, and the vehicle-mounted applications can be accessed.

In some embodiments, the permission of the device identifier can be limited through a two-level permission relationship. For example, first, based on the permission configuration information of the device identifier, it is determined whether the device identifier is configured with control permission for home applications. After the device identifier is configured with control permission for home applications, it is then determined based on the digital key bound to the device identifier whether the digital key is configured with control permission for home-to-vehicle applications.

In some embodiments, after determining that the device identifier is bound to a digital key, the smart home device may also send the device identifier to a smart vehicle or a vehicle server, so that the smart vehicle or the vehicle server determines whether to allow the smart home device to access and control the smart vehicle using the home-to-vehicle application based on the permission configuration information of the digital key bound to the device identifier. It is also possible to determine whether the digital key bound to the device identifier is configured with control permission for the home-to-vehicle application based on a response message of the device identifier returned by the smart vehicle or the vehicle server, where the response message carries the control permission for the digital key. The vehicle server is the server of the smart vehicle. In some embodiments, the device identifier can be sent to the vehicle server through their respective servers, and the device identifier can be sent directly to the smart vehicle based on the AP node.

In some embodiments, when the smart home device cannot obtain the control permission of the digital key, the digital key can be sent to the smart vehicle or vehicle server. After that, the smart vehicle or vehicle server determines whether to allow the smart home device to access and control the home-to-vehicle application based on the control permission corresponding to the digital key. The smart vehicle or vehicle server can determine whether the digital key is a registered digital key. If so, it means that the device identifier bound to the digital key can access and control the home-to-vehicle application, and then control the smart vehicle. Otherwise, it means that the digital key cannot access the home-to-vehicle application, and then cannot control the smart vehicle. After the smart vehicle or vehicle server determines the control permission corresponding to the digital key, a response message carrying the control permission of the digital key can be fed back to the smart home device, thereby determining whether the device identifier bound to the digital key is configured with control permission for the home-to-vehicle application based on the control permission carried in the response message.

In some embodiments, after obtaining the application account, it is determined whether the smart home device is configured with the control permission to access and control the smart vehicle using the home application in the following manner.

Firstly, determine the permission information of the application account.

Secondly, determine whether the device identifier is configured with control permission for accessing and controlling the smart vehicle by means of the home application according to the permission configuration information.

In some embodiments, when the application account is configured with control permission for the home application, one possible scenario is that the application account is configured with permission to use all application programs in the home application; or, the application account is configured with permission to use at least the home-to-vehicle application; or, the application account is configured with permission to use at least one or more functions in the home-to-vehicle application. The embodiments do not impose too many restrictions on this.

In some embodiments, the smart home device can determine whether the application account is bound to a digital key while obtaining the application account, thereby determining whether the control permission to access and control the smart vehicle using the home-to-vehicle application is configured based on the digital key. The specific steps are as follows:
determine whether the application account is bound to a digital key;
based on that the application account is bound to the digital key, determine whether the smart home device is configured with the control permission for accessing and controlling the smart vehicle by means of the home-to-vehicle application according to permission configuration information of the digital key bound to the application account;
where a binding relationship between the digital key and the application account is generated during a creation process of the digital key.

In some embodiments, the permission of an application account can be limited through a two-level permission relationship. For example, firstly, based on the permission configuration information of the application account, it is determined whether the application account is configured with control permission for a home application. After the application account is configured with control permission for a home application, it is then determined based on the digital key bound to the application account whether the digital key is configured with control permission for a home-to-vehicle application.

In some embodiments, the embodiments can establish multi-level permission control. In some embodiments, the device identifier is bound to the application account and the digital key, and the permission to use the digital key can be determined in the following manner.

When it is determined that the device identifier is configured with control permission for the home application according to the permission configuration information of the device identifier, it is determined whether the application account is configured with control permission for the home-to-vehicle application according to the application account bound to the device identifier. When it is determined that the application account is configured with control permission for the home-to-vehicle application, the control permission of the application account for the functions in the home-to-vehicle application is determined according to the digital key bound to the application account, that is, the control permission of the application account is determined based on the bound digital key, where the application account can be configured with control permission for all functions in the home-to-vehicle application, or with control permission for some functions in the home-to-vehicle application. Through multi-level permission control, different fine-grained permission control for the functions of the home application, home-to-vehicle application, and home-to-vehicle application is realized, which is suitable for a variety of application scenarios.

In some embodiments, when the smart home device determines that the application account is bound to a digital key, the application account can also be sent to the smart vehicle or vehicle server, so that the smart vehicle or vehicle server can determine whether to allow the smart home device to access and control the smart vehicle using the home-to-vehicle application based on the permission configuration information of the digital key bound to the application account.

In some embodiments, after determining that the application account is bound to a digital key, the smart home device can also send the application account to the smart vehicle or vehicle server, so that the smart vehicle or vehicle server determines whether to allow the smart home device to access and control the smart vehicle using the home-to-vehicle application based on the permission configuration information of the digital key bound to the application account. It is also possible to determine whether the digital key bound to the application account is configured with control permission for the home-to-vehicle application based on the response message of the application account returned by the smart vehicle or vehicle server, wherein the response message carries the control permission of the digital key (or application account). In some embodiments, the application account can be sent to the vehicle server through their respective servers, and the application account can be sent to the smart vehicle based on the AP node.

In some embodiments, when the smart home device cannot obtain the control permission of the digital key, the digital key can be sent to the smart vehicle or vehicle server. After that, the smart vehicle or vehicle server determines whether to allow the smart home device to use the home-to-vehicle application for access and control based on the control permission corresponding to the digital key. The smart vehicle or vehicle server can determine whether the digital key is a registered digital key. If so, it means that the device identifier bound to the digital key can access and control the home-to-vehicle application, and then control the smart vehicle. Otherwise, it means that the digital key cannot access the home-to-vehicle application, and then cannot control the smart vehicle. After the smart vehicle or vehicle server determines the control permission corresponding to the digital key, a response message carrying the control permission of the digital key can be fed back to the smart home device, thereby determining whether the device identifier bound to the digital key is configured with control permission for the home-to-vehicle application based on the control permission carried in the response message.

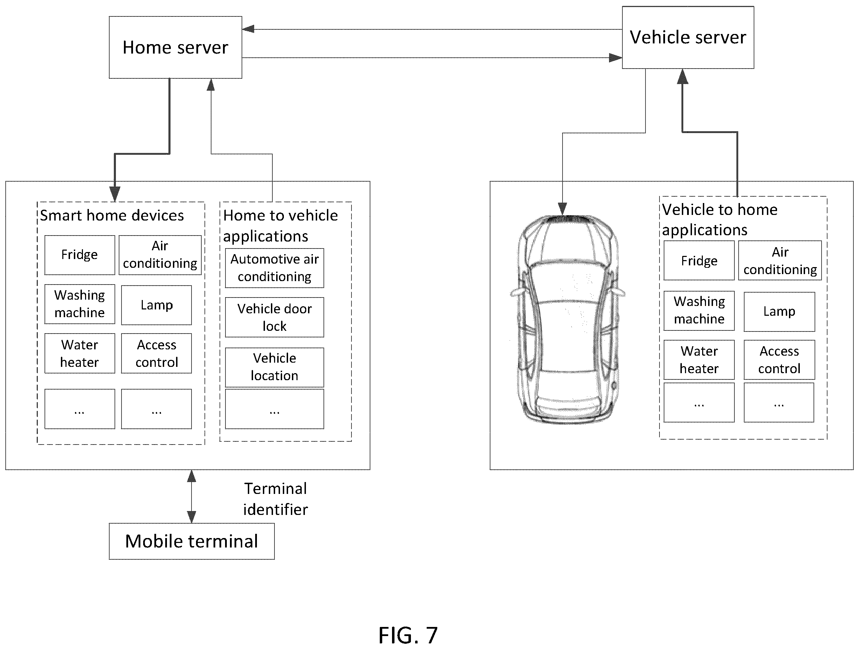

In some embodiments, as shown in FIG. 7, the embodiments provide a schematic diagram of the connection relationship of a smart home device accessing a home-to-vehicle application through a single mobile terminal. The smart home device in the embodiments can establish a connection with a smart vehicle through a server, and access the home-to-vehicle application included in the home application by obtaining the device identifier of a single mobile terminal.

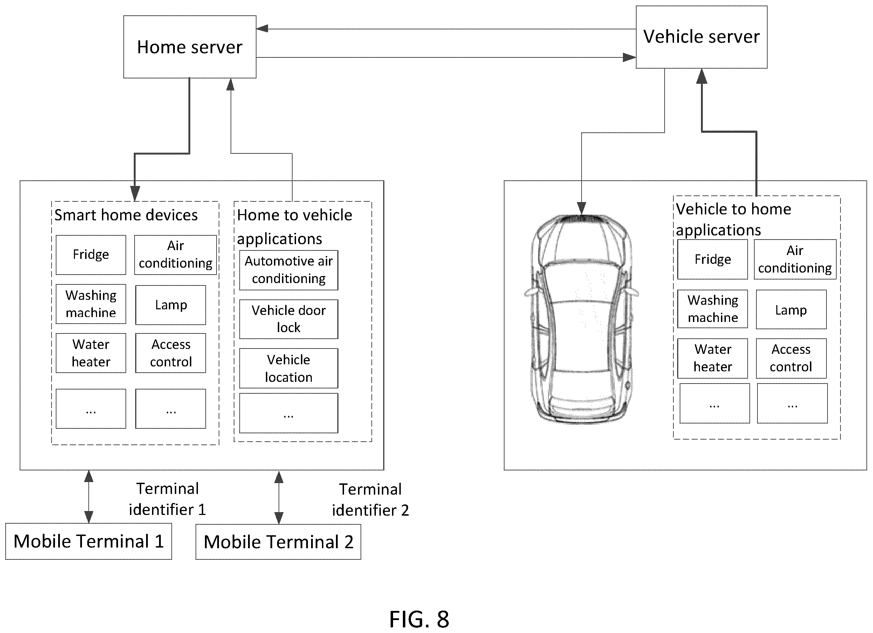

In some embodiments, as shown in FIG. 8, the embodiments provide a schematic diagram of the connection relationship of a smart home device accessing a home-to-vehicle application through a plurality of mobile terminals. The smart home device in the embodiments can establish a connection with a smart vehicle through a server, and access different functions in the vehicle-to-home application included in the home application, or access different application programs included in the home application by obtaining device identifiers of the plurality of mobile terminals.

In some embodiments, the device identifiers of different mobile terminals can be obtained, where different device identifiers are bound to different digital keys, and different digital keys have different permission configuration information.

The device identifiers of different mobile terminals are sent to the smart vehicle or vehicle server, so that the smart vehicle or vehicle server determines whether to allow the smart home device to access and control the smart vehicle using the home-to-vehicle application based on the permission configuration information of the digital key bound to the different device identifiers.

In some embodiments, different application accounts can be obtained, where different application accounts are bound to different digital keys, and different digital keys have different permission configuration information.

Different application accounts are sent to the smart vehicle or vehicle server, so that the smart vehicle or vehicle server determines whether to allow smart home devices to access and control the smart vehicle using the home-to-vehicle application based on the permission configuration information of the digital key bound to the different application accounts.

In some embodiments, before using the home-to-vehicle application to access and control the smart vehicle, a connection between the smart vehicle and the smart home device can be established through their respective servers, or a connection between the smart vehicle and the smart home device can be established through a wireless communication node.

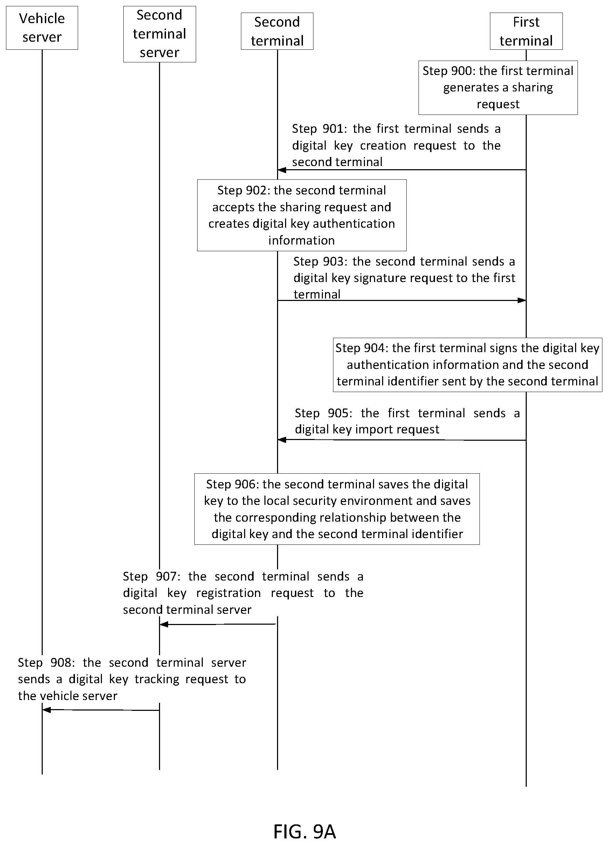

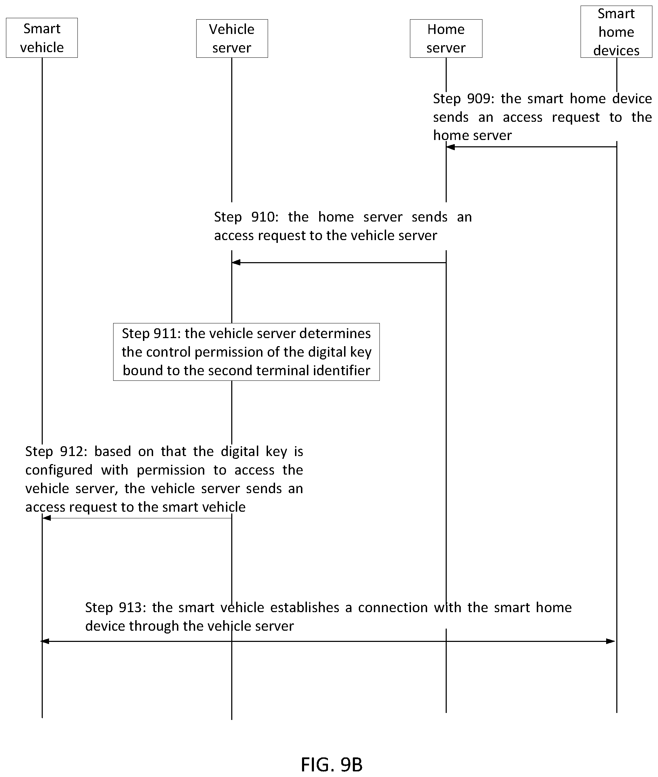

As shown in FIG. 9A and FIG. 9B, the embodiments further provide an implementation process of a smart home device accessing a smart vehicle, which specifically includes a registration process and an interconnection process, where the registration process is shown in FIG. 9A.

Step 900: the first terminal generates a sharing request.

Step 901: the first terminal sends a digital key creation request to the second terminal, where the request includes an identifier familyApplication=1, which is used to request access to a smart home device.

Step 902: the second terminal accepts the sharing request and creates digital key authentication information.

Step 903: the second terminal sends a digital key signature request to the first terminal, where the request includes digital key authentication information and a second terminal identifier.

Step 904: the first terminal signs the digital key authentication information and the second terminal identifier sent by the second terminal.

Step 905: the first terminal sends a digital key import request, where the digital key import request includes the signed digital key authentication information and the second terminal identifier.

Step 906: the second terminal saves the digital key to the local security environment and saves the corresponding relationship between the digital key and the second terminal identifier.

Step 907: the second terminal sends a digital key registration request to the second terminal server, where the request includes the signed digital key authentication information and the second terminal identifier.

Step 908: the second terminal server sends a digital key tracking request to the vehicle server, where the request includes the signed digital key authentication information and the second terminal identifier.

As shown in FIG. 9B, the interconnection process provided in the embodiments is as follows.

Step 909: the smart home device sends an access request to the home server, where the request carries a second terminal identifier.

Step 910: the home server sends an access request to the vehicle server, where the request carries a second terminal identifier.

Step 911: the vehicle server determines the control permission of the digital key bound to the second terminal identifier.

Step 912: based on that the digital key is configured with permission to access the vehicle server, the vehicle server sends an access request to the smart vehicle.

Step 913: the smart vehicle establishes a connection with the smart home device through the vehicle server.

In the process of creating the digital key in the embodiments, a binding relationship between the digital key and the terminal identifier is established. When the mobile terminal approaches the corresponding smart home device, by verifying the device identifier, it can be determined whether the current object has the control permission to control the vehicle application. For example, when the object needs to go out while watching TV or video, after connecting to the same network with the smart TV through the mobile terminal, the terminal identifier of the mobile terminal is verified. After the verification is passed, it can be determined whether to enable the interaction permission between the smart vehicle and the smart TV according to the permission configuration of the terminal identifier, or when the mobile terminal is a certain distance away from the TV or interacts with the TV, such as using the mobile terminal to scan the QR code displayed on the smart TV, or through distance sensing, collision sensing, etc., to verify the terminal identifier of the mobile terminal. It is also possible to establish a binding relationship between the digital key and the application account, verify the permission configuration of the application account, and determine whether to enable the interaction permission between the smart vehicle and the smart TV.

After the verification is passed and it is determined that the smart TV and the vehicle-mounted application can be interconnected according to the terminal identifier or the permission configuration of the application account, the video information currently played on the smart TV can be retained, and the video information and the play time node can be sent to the vehicle-mounted application. When the user gets in the vehicle, he can use the digital key bound to the terminal identifier or application account to verify with the smart vehicle. After the verification is passed, the video information and play progress can be read. The video play progress can also be sent to the smart vehicle's display screen, such as the rear seat display screen, by operating the home-to-vehicle application on the smart TV, and the play progress can be synchronized on the display screen.

Based on the same inventive concept, the embodiments of the present disclosure also provide a smart vehicle. Since the smart vehicle is the smart vehicle in the method in the embodiments of the present disclosure, and the principle of solving the problem by the smart vehicle is similar to that of the method, the implementation of the smart vehicle can refer to the implementation of the method, and the repeated parts will not be repeated.

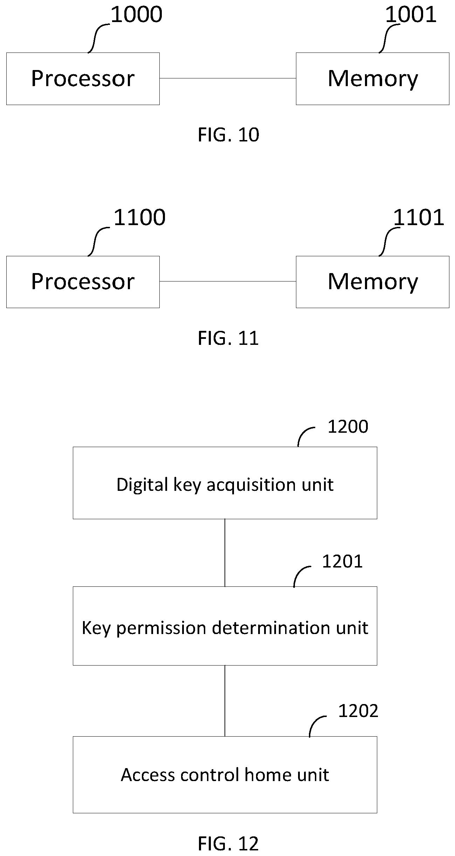

As shown in FIG. 10, the system includes a processor 1000 and a memory 1001, where the memory is used to store a program executable by the processor, and the processor is used to read the program in the memory and execute the following operations:
obtaining a digital key to determine permission configuration information of the digital key;
determining, according to the permission configuration information, whether the digital key is configured with control permission for a vehicle-mounted application;
based on that the digital key is configured with the control permission for the vehicle-mounted application, accessing and controlling an application device by means of the vehicle-mounted application; where the application device comprises a device that establishes a connection with the smart vehicle.

In some embodiments, the processor 1000 is specifically configured to execute:
obtaining a terminal identifier bound to the digital key, wherein a binding relationship between the digital key and the terminal identifier is generated during a creation process of the digital key;
determining whether the digital key is configured with the control permission for the vehicle-mounted application according to control permission corresponding to the terminal identifier.

In some embodiments, the processor 1000 is specifically configured to execute:
obtaining a terminal identifier bound to the digital key, where a binding relationship between the digital key and the terminal identifier is generated during a creation process of the digital key;
sending the terminal identifier to the application device or an application server, so that the application device or the application server determines whether to allow the smart vehicle to access and control the application device by means of the vehicle-mounted application according to control permission corresponding to the terminal identifier;
where the application server comprises a server of the application device.

In some embodiments, the processor 1000 is specifically configured to execute:
obtaining an application account bound to the digital key, where a binding relationship between the digital key and the application account is generated during the creation process of the digital key;
determining whether the digital key is configured with the control permission for the vehicle-mounted application according to control permission corresponding to the application account.

In some embodiments, the processor 1000 is specifically configured to execute:
obtaining an application account bound to the digital key, where a binding relationship between the digital key and the application account is generated during the creation process of the digital key;
sending the application account to the application device or an application server, so that the application device or the application server determines whether to allow the smart vehicle to access and control the application device by means of the vehicle-mounted application according to control permission corresponding to the application account;
where the application server comprises a server of the application device.

In some embodiments, the vehicle-mounted application includes different application programs; the processor 1000 is further configured to execute:
determining a permission level of the digital key according to the permission configuration information;
determining that the digital key is configured with control permission of the application program corresponding to its own permission level according to a corresponding relationship between a preset permission level and the application program.

In some embodiments, the vehicle-mounted application includes different application programs, and the application programs include different functions; the processor 1000 is further configured to execute:
determining, according to the permission configuration information, a function permission configuration corresponding to each of the functions;
determining that the digital key is configured with control permission for each of the functions according to the function permission configuration.

In some embodiments, the application program includes a plurality of functions, the plurality of functions include a plurality of control functions corresponding to a plurality of application devices, or a plurality of control functions included in one application device; the processor 1000 is specifically configured to execute:
based on that the digital key is configured with control permission for at least one function of the application program, accessing and controlling the at least one function corresponding to the application device by means of the application program.

In some embodiments, the processor 1000 is further configured to execute:
receiving an access request message sent by the application device or an application server, where the access request message comprises a terminal identifier obtained by the application device;
determining whether the digital key bound to the terminal identifier is legal and valid;
based on that the digital key is legal and valid, accessing and controlling the smart vehicle according to the permission configuration information of the digital key.

In some embodiments, the processor 1000 is further configured to execute:
receiving an access request message sent by the application device or an application server, where the access request message comprises an application account obtained by the application device;
determining whether the digital key bound to the application account is legal and valid;
based on that the digital key is legal and valid, accessing and controlling the smart vehicle according to the permission configuration information of the digital key.

In some embodiments, the application device includes a proximal device and a remote device; the processor 1000 is specifically configured to execute:
based on that the digital key is configured with the control permission for the vehicle-mounted application, accessing and controlling the proximal device and/or the remote device by means of the vehicle-mounted application.

In some embodiments, the remote device includes a smart home device; the processor 1000 is specifically configured to execute:
based on that the digital key is configured with the control permission for the vehicle-mounted application, accessing and controlling the smart home device by means of the vehicle-mounted application.

In some embodiments, the vehicle-mounted application includes a vehicle-to-home application for controlling smart home devices; the processor 1000 is specifically further configured to execute:
based on that the digital key is configured with control permission for the vehicle-to-home application, accessing and controlling the smart home device by means of the vehicle-to-home application.

In some embodiments, before using the vehicle-mounted application to access and control the application device, the processor 1000 is further configured to execute:
establishing a connection between the smart vehicle and the application device by means of their respective servers, or establishing a connection between the smart vehicle and the application device by means of a wireless communication node.

Based on the same inventive concept, the embodiments of the present disclosure also provide a smart home device. Since the smart home device is the smart home device in the method in the embodiments of the present disclosure, and the principle of solving the problem by the smart home device is similar to that of the method, the implementation of the smart home device can refer to the implementation of the method, and the repeated parts will not be repeated.

As shown in FIG. 11, the system includes a processor 1100 and a memory 1101, where the memory is used to store a program executable by the processor, and the processor is used to read the program in the memory and execute the following steps:
obtaining a device identifier or an application account of a mobile terminal;
determining, according to the device identifier or the application account, whether the smart home device is configured with control permission to access and control a smart vehicle by means of a home application;
based on that the control permission for accessing and controlling the smart vehicle by means of the home application is configured, accessing and controlling the smart vehicle by means of the home application.

In some embodiments, the home application includes a home-to-vehicle application for controlling a smart vehicle; the processor 1100 is further configured to execute:
based on that the smart home device is configured with control permission for accessing and controlling the smart vehicle by means of the home-to-vehicle application, accessing and controlling the smart vehicle by means of the home-to-vehicle application.

In some embodiments, the processor 1100 is specifically configured to execute:
determining permission configuration information of the device identifier;
determining whether the device identifier is configured with control permission for accessing and controlling the smart vehicle by means of the home application according to the permission configuration information.

In some embodiments, the processor 1100 is specifically configured to determine whether the smart home device is configured with control permission to access and control the smart vehicle using the home-to-vehicle application in the following manner:
determining whether the device identifier is bound to a digital key;
based on that the device identifier is bound to the digital key, determining whether the smart home device is configured with the control permission for accessing and controlling the smart vehicle by means of the home-to-vehicle application according to permission configuration information of the digital key bound to the device identifier;
where a binding relationship between the digital key and the device identifier is generated during a creation process of the digital key.

In some embodiments, when determined that the device identifier is bound to a digital key, the processor 1100 is further configured to execute:
sending the device identifier to the smart vehicle or a vehicle server, so that the smart vehicle or the vehicle server determines whether to allow the smart home device to access and control the smart vehicle by means of the home-to-vehicle application according to the permission configuration information of the digital key bound to the device identifier;
where the vehicle server is a server of the smart vehicle.

In some embodiments, the processor 1100 is specifically configured to execute:
determining permission information of the application account;
determining whether the device identifier is configured with control permission for accessing and controlling the smart vehicle by means of the home application according to the permission configuration information.

In some embodiments, the processor 1100 is specifically configured to determine whether the smart home device is configured with control permission to access and control the smart vehicle using the home-to-vehicle application in the following manner:
determining whether the application account is bound to a digital key;
based on that the application account is bound to the digital key, determining whether the smart home device is configured with the control permission for accessing and controlling the smart vehicle by means of the home-to-vehicle application according to permission configuration information of the digital key bound to the application account;
where a binding relationship between the digital key and the application account is generated during a creation process of the digital key.

In some embodiments, based on that the application account is bound to the digital key, the processor 1100 is further configured to execute:
sending the application account to the smart vehicle or a vehicle server, so that the smart vehicle or the vehicle server determines whether to allow the smart home device to access and control the smart vehicle by means of the home-to-vehicle application according to the permission configuration information of the digital key bound to the application account;
where the vehicle server is a server of the smart vehicle.

In some embodiments, the processor 1100 is further configured to execute:
obtaining device identifiers of different mobile terminals, where different device identifiers are bound to different digital keys, and the different digital keys have different permission configuration information;
sending the device identifiers of the different mobile terminals to the smart vehicle or a vehicle server, so that the smart vehicle or the vehicle server determines whether to allow the smart home device to access and control the smart vehicle by means of the home-to-vehicle application according to permission configuration information of the digital keys bound to the different device identifiers.

In some embodiments, the processor 1100 is further configured to execute:
obtaining different application accounts, where different application accounts are bound to different digital keys, and the different digital keys have different permission configuration information;
sending the different application accounts to the smart vehicle or a vehicle server, so that the smart vehicle or the vehicle server determines whether to allow smart home device to access and control the smart vehicle by means of the home-to-vehicle application according to permission configuration information of the digital keys bound to the different application accounts.

In some embodiments, before using the home-to-vehicle application to access and control the smart vehicle, the processor 1100 is further configured to execute:
establishing a connection between the smart vehicle and the smart home device by means of their respective servers, or establishing a connection between the smart vehicle and the smart home device by means of a wireless communication node.

Based on the same inventive concept, the embodiments of the present disclosure also provide a permission control device. Since the device is the device in the method in the embodiments of the present disclosure, and the principle of solving the problem by the device is similar to that of the method, the implementation of the device can refer to the implementation of the method, and the repeated parts will not be repeated.

As shown in FIG. 12 , the device includes:
a digital key acquisition unit 1200, configured to acquire a digital key and determine permission configuration information of the digital key;
a key permission determination unit 1201, configured to determine whether the digital key is configured with control permission for the vehicle-mounted application according to the permission configuration information;
an access control home unit 1202, configured to access and control application devices using the vehicle-mounted application when the digital key is configured with control permission for the vehicle-mounted application; where the application device includes a device that establishes a connection with the smart vehicle.

Based on the same inventive concept, the embodiments of the present disclosure also provide another permission control device. Since the device is the device in the method in the embodiment of the present disclosure, and the principle of solving the problem by the device is similar to that of the method, the implementation of the device can refer to the implementation of the method, and the repeated parts will not be repeated.

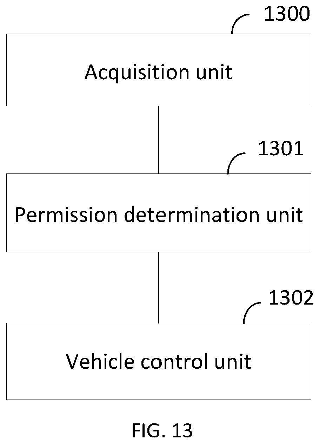

As shown in FIG. 13 , the device includes:
an acquisition unit 1300, configured to acquire a device identifier or an application account of a mobile terminal;
a permission determination unit 1301, configured to determine whether the smart home device is configured with control permission to access and control the smart vehicle using the home application according to the device identifier or application account;
a vehicle control unit 1302, configured to access and control the smart vehicle using the home application when the control permission for accessing and controlling the smart vehicle using the home application is configured.

Based on the same inventive concept, the embodiments of the present disclosure provide a computer storage medium, the computer storage medium includes: computer program code, when the computer program code is run on a computer, the computer executes any of the permission control methods discussed above. Since the principle of solving the problem by the above-mentioned computer storage medium is similar to that of the permission control method, the implementation of the above-mentioned computer storage medium can refer to the implementation of the method, and the repeated parts will not be repeated.

In some embodiments, the computer storage medium can include: Universal Serial Bus Flash Drive (USB), mobile hard disk, read-only memory (ROM), random access memory (RAM), magnetic disk or optical disk, and other storage media that can store program code.

Based on the same inventive concept, the embodiments of the present disclosure also provide a computer program product, which includes: computer program code, when the computer program code is run on a computer, the computer executes any of the permission control methods discussed above. Since the principle of solving the problem by the above computer program product is similar to that of the permission control method, the implementation of the above computer program product can refer to the implementation of the method, and the repeated parts will not be repeated.

The computer program product can employ any combination of one or more readable media. The readable medium can be a readable signal medium or a readable storage medium. The readable storage medium can be, for example, but not limited to, an electrical, magnetic, optical, electromagnetic, infrared, or semiconductor system, device or device, or any combination thereof. More specific examples (non-exhaustive list) of readable storage media include: an electrical connection with one or more wires, a portable disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

Those skilled in the art will appreciate that the embodiments of the present disclosure can be provided as methods, systems, or computer program products. Therefore, the present disclosure can take the form of a complete hardware embodiment, a complete software embodiment, or an embodiment combining software and hardware. Moreover, the present disclosure can take the form of a computer program product implemented on one or more computer-usable storage media (including but not limited to disk storage and optical storage, etc.) containing computer-usable program code.

The present disclosure is described with reference to the flowchart and/or block diagram of the method, device (system), and computer program product according to the embodiment of the present disclosure. It should be understood that each process and/or box in the flowchart and/or block diagram, as well as the combination of the process and/or box in the flowchart and/or block diagram can be implemented by computer program instructions. These computer program instructions can be provided to a processor of a general-purpose computer, a special-purpose computer, an embedded processor or other programmable data processing device to produce a machine, so that the instructions executed by the processor of the computer or other programmable data processing device produce a device for implementing the functions specified in one process or plurality of processes in the flowchart and/or one box or plurality of boxes in the block diagram.

These computer program instructions can also be stored in a computer-readable memory that can direct a computer or other programmable data processing device to work in a specific manner, so that the instructions stored in the computer-readable memory produce a manufactured product including an instruction device that implements the functions specified in one or more processes in the flowchart and/or one or more boxes in the block diagram.

These computer program instructions can also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more boxes in the block diagram.

Evidently those skilled in the art can make various modifications and variations to the present disclosure without departing from the spirit and scope of the present disclosure. Thus the present disclosure is also intended to encompass these modifications and variations therein as long as these modifications and variations to the present disclosure come into the scope of the claims of the present disclosure and their equivalents.

## Claims

1. A method for permission control, applied to a smart vehicle, comprising:
obtaining a digital key to determine permission configuration information of the digital key;
determining, according to the permission configuration information, whether the digital key is configured with control permission for a vehicle-mounted application;
based on that the digital key is configured with the control permission for the vehicle-mounted application, accessing and controlling an application device by means of the vehicle-mounted application;
wherein the application device comprises a device that establishes a connection with the smart vehicle.

2. The method according to claim 1, wherein the determining whether the digital key is configured with the control permission for the vehicle-mounted application, comprises:
obtaining a terminal identifier bound to the digital key, wherein a binding relationship between the digital key and the terminal identifier is generated during a creation process of the digital key;
determining whether the digital key is configured with the control permission for the vehicle-mounted application according to control permission corresponding to the terminal identifier.

3. The method according to claim 1, wherein the determining whether the digital key is configured with the control permission for the vehicle-mounted application, comprises:
obtaining a terminal identifier bound to the digital key, wherein a binding relationship between the digital key and the terminal identifier is generated during a creation process of the digital key;
sending the terminal identifier to the application device or an application server, so that the application device or the application server determines whether to allow the smart vehicle to access and control the application device by means of the vehicle-mounted application according to control permission corresponding to the terminal identifier;
wherein the application server comprises a server of the application device.

4. The method according to claim 1, wherein the determining whether the digital key is configured with the control permission for the vehicle-mounted application, comprises:
obtaining an application account bound to the digital key, wherein a binding relationship between the digital key and the application account is generated during a creation process of the digital key;
determining whether the digital key is configured with the control permission for the vehicle-mounted application according to control permission corresponding to the application account.

5. The method according to claim 1, wherein the determining whether the digital key is configured with the control permission for the vehicle-mounted application, comprises:
obtaining an application account bound to the digital key, wherein a binding relationship between the digital key and the application account is generated during a creation process of the digital key;
sending the application account to the application device or an application server, so that the application device or the application server determines whether to allow the smart vehicle to access and control the application device by means of the vehicle-mounted application according to control permission corresponding to the application account;
wherein the application server comprises a server of the application device.

6. The method according to claim 1, wherein the vehicle-mounted application comprises different application programs; the method further comprises:
determining a permission level of the digital key according to the permission configuration information;
determining that the digital key is configured with control permission for an application program corresponding to the permission level of the digital key according to a corresponding relationship between preset permission levels and the application programs.

7. The method according to claim 1, wherein the vehicle-mounted application comprises different application programs and the application program comprises different functions; the method further comprises:
determining, according to the permission configuration information, a function permission configuration corresponding to a function;
determining that the digital key is configured with control permission for the function according to the function permission configuration.

8. The method according to claim 7, wherein the application program comprises a plurality of functions, the plurality of functions comprise: a plurality of control functions corresponding to a plurality of application devices respectively, or a plurality of control functions corresponding to one application device; the method further comprises:
based on that the digital key is configured with control permission for at least one function of the application program, accessing and controlling the at least one function corresponding to the application device by means of the application program.

9. The method according to claim 1, further comprising:
receiving an access request message sent by the application device or an application server, wherein the access request message comprises a terminal identifier obtained by the application device;
determining whether the digital key bound to the terminal identifier is legal and valid;
based on that the digital key is legal and valid, accessing and controlling the smart vehicle according to the permission configuration information of the digital key.

10. The method according to claim 1, further comprising:
receiving an access request message sent by the application device or an application server, wherein the access request message comprises an application account obtained by the application device;
determining whether the digital key bound to the application account is legal and valid;
based on that the digital key is legal and valid, accessing and controlling the smart vehicle according to the permission configuration information of the digital key.

11. The method according to any one of claims 1 to 8, wherein the application device comprises a proximal device and a remote device; and the accessing and controlling the application device by means of the vehicle-mounted application, comprises:
based on that the digital key is configured with the control permission for the vehicle-mounted application, accessing and controlling the proximal device and/or the remote device by means of the vehicle-mounted application.

12. The method according to claim 11, wherein the remote device comprises a smart home device; and the accessing and controlling the proximal device and/or the remote device by means of the vehicle-mounted application, comprises:
based on that the digital key is configured with the control permission for the vehicle-mounted application, accessing and controlling the smart home device by means of the vehicle-mounted application.

13. The method according to claim 12, wherein the vehicle-mounted application comprises a vehicle-to-home application for controlling the smart home device; the method further comprises:
based on that the digital key is configured with the control permission for the vehicle-to-home application, accessing and controlling the smart home device by means of the vehicle-to-home application.

14. The method according to any one of claims 1 to 8, wherein before accessing and controlling the application device by means of the vehicle-mounted application, the method further comprises:
establishing a connection between the smart vehicle and the application device by means of a server of the smart vehicle and a server of the application device, or establishing a connection between the smart vehicle and the application device by means of a wireless communication node.

15. A method for permission control, applied to a smart home device, comprising:
obtaining a device identifier or an application account of a mobile terminal;
determining, according to the device identifier or the application account, whether the smart home device is configured with control permission for accessing and controlling a smart vehicle by means of a home application;
based on that the smart home device is configured with the control permission for accessing and controlling the smart vehicle by means of the home application, accessing and controlling the smart vehicle by means of the home application.

16. The method according to claim 15, wherein the home application comprises a home-to-vehicle application for controlling the smart vehicle; the method further comprises:
based on that the smart home device is configured with the control permission for accessing and controlling the smart vehicle by means of the home-to-vehicle application, accessing and controlling the smart vehicle by means of the home-to-vehicle application.

17. The method according to claim 15, wherein the determining, according to the device identifier, whether the smart home device is configured with the control permission for accessing and controlling the smart vehicle by means of the home application, comprises:
determining permission configuration information of the device identifier;
determining whether the device identifier is configured with control permission for accessing and controlling the smart vehicle by means of the home application according to the permission configuration information.

18. The method according to claim 16, wherein the determining whether the smart home device is configured with control permission for accessing and controlling the smart vehicle by means of the home-to-vehicle application is performed by:
determining whether the device identifier is bound to a digital key;
based on that the device identifier is bound to the digital key, determining whether the smart home device is configured with the control permission for accessing and controlling the smart vehicle by means of the home-to-vehicle application according to permission configuration information of the digital key bound to the device identifier;
wherein a binding relationship between the digital key and the device identifier is generated during a creation process of the digital key.

19. The method according to claim 18, wherein, based on that the device identifier is bound to the digital key, the method further comprises:
sending the device identifier to the smart vehicle or a vehicle server, so that the smart vehicle or the vehicle server determines whether to allow the smart home device to access and control the smart vehicle by means of the home-to-vehicle application according to the permission configuration information of the digital key bound to the device identifier;
wherein the vehicle server is a server of the smart vehicle.

20. The method according to claim 15, wherein the determining, according to the application account, whether the smart home device is configured with the control permission to access and control the smart vehicle by means of the home application, comprises:
determining permission information of the application account;
determining whether the device identifier is configured with control permission for accessing and controlling the smart vehicle by means of the home application according to the permission configuration information.

21. The method according to claim 16, wherein the determining whether the smart home device is configured with the control permission for accessing and controlling the smart vehicle by means of the home-to-vehicle application is performed by:
determining whether the application account is bound to a digital key;
based on that the application account is bound to the digital key, determining whether the smart home device is configured with the control permission for accessing and controlling the smart vehicle by means of the home-to-vehicle application according to permission configuration information of the digital key bound to the application account;
wherein a binding relationship between the digital key and the application account is generated during a creation process of the digital key.

22. The method according to claim 21, wherein, based on that the application account is bound to the digital key, the method further comprises:
sending the application account to the smart vehicle or a vehicle server, so that the smart vehicle or the vehicle server determines whether to allow the smart home device to access and control the smart vehicle by means of the home-to-vehicle application according to the permission configuration information of the digital key bound to the application account;
wherein the vehicle server is a server of the smart vehicle.

23. The method according to any one of claims 15 to 22, further comprising:
obtaining device identifiers of different mobile terminals, wherein different device identifiers are bound to different digital keys, and permission configuration information of the different digital keys is different;
sending the device identifiers of the different mobile terminals to the smart vehicle or a vehicle server, so that the smart vehicle or the vehicle server determines whether to allow the smart home device to access and control the smart vehicle by means of the home-to-vehicle application according to permission configuration information of the digital keys bound to the different device identifiers.

24. The method according to any one of claims 15 to 22, further comprising:
obtaining different application accounts, wherein different application accounts are bound to different digital keys, and permission configuration information of the different digital keys is different;
sending the different application accounts to the smart vehicle or a vehicle server, so that the smart vehicle or the vehicle server determines whether to allow the smart home device to access and control the smart vehicle by means of the home-to-vehicle application according to permission configuration information of the digital keys bound to the different application accounts.

25. The method according to any one of claims 15 to 22, wherein before accessing and controlling the smart vehicle by means of the home-to-vehicle application, the method further comprises:
establishing a connection between the smart vehicle and the smart home device by means of a server of the smart vehicle and a server of the smart home device, or establishing a connection between the smart vehicle and the smart home device by means of a wireless communication node.

26. A smart vehicle, comprising a processor and a memory, wherein the memory is configured to store a program executable by the processor and the processor is configured to read the program in the memory and execute the method of any one of claims 1 to 14.

27. A smart home device, comprising a processor and a memory, wherein the memory is configured to store a program executable by the processor and the processor is configured to read the program in the memory and execute the method of any one of claims 15 to 25.

28. A computer storage medium storing a computer program, wherein the computer program, when executed by a processor, implements the method of any one of claims 1 to 14 or claims 15 to 25.
